(19) Europäisches Patentamt
European Patent Office
Office européen des brevets

(11) **EP 4 468 724 A1**

(12) **EUROPEAN PATENT APPLICATION**
published in accordance with Art. 153(4) EPC

(43) Date of publication:
**27.11.2024  Bulletin 2024/48**

(21) Application number: **23742852.9**

(22) Date of filing: **16.01.2023**

(51) International Patent Classification (IPC):
**H04N 23/00** (2023.01)    **H04N 23/60** (2023.01)
**B60R 1/00** (2022.01)

(86) International application number:
**PCT/CN2023/072392**

(87) International publication number:
**WO 2023/138537 (27.07.2023 Gazette 2023/30)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **18.01.2022  CN 202210056928**

(71) Applicant: **Great Wall Motor Company Limited
Hebei 071000 (CN)**

(72) Inventors:
• **DIAO, Yue
Baoding, Hebei 071000 (CN)**

• **ZHAO, Long
Baoding, Hebei 071000 (CN)**
• **YE, Chunyu
Baoding, Hebei 071000 (CN)**
• **WANG, Guangfu
Baoding, Hebei 071000 (CN)**
• **CHEN, Xianling
Baoding, Hebei 071000 (CN)**
• **FAN, Qiang
Baoding, Hebei 071000 (CN)**
• **YE, Nianjin
Baoding, Hebei 071000 (CN)**

(74) Representative: **Klunker IP
Patentanwälte PartG mbB
Destouchesstraße 68
80796 München (DE)**

(54) **IMAGE PROCESSING METHOD AND APPARATUS, TERMINAL DEVICE AND STORAGE MEDIUM**

(57)    The present application discloses an image processing method and a device, a terminal device, and a storage medium. The method includes: acquiring vehicle target information and a first image set shot by at least two camera devices inside the vehicle, and the at least two camera devices are positioned at different locations inside the vehicle; performing image processing on the first image set based on the vehicle target information to obtain a second image corresponding to the first image set, and the image processing includes at least one of noise reduction, color correction, or clarity processing; and controlling a display device inside the vehicle to display each of the second images; the present application provides a plurality of camera devices at different positions inside the vehicle, which not only enriches the functionality of the vehicle cameras but also enhances the intelligence level.

the vehicle target information and a first set of images shot by at least two camera devices located inside the vehicle are obtained. — S101

↓

Based on the vehicle target information, the first image set is performed by image processing to obtain a second image corresponding to the first image set. — S102

↓

a display device inside the vehicle is controlled to display the second image. — S103

FIG. 2

EP 4 468 724 A1

## Description

The present application claims priority to Chinese Patent Application No. 202210056928.6, titled "Image Processing Method and Device, and Vehicle," filed on January 18, 2022 to China National Intellectual Property Administration, the entire contents of which are incorporated herein by reference.

## TECHNICAL FIELD

The present application relates to the field of image processing technology, specifically to an image processing method and a device, a terminal device, and a storage medium.

## BACKGROUND

With the improvement of living standards, vehicles have become indispensable in daily life. As vehicle usage frequency increases and time spent in vehicles grows, the demand for vehicles has expanded beyond mere transportation.

The inventors have observed that currently, vehicle-mounted cameras are primarily used for reversing assistance, offering limited functionality. Even if vehicles are provided with cameras for user entertainment, however, the intelligence level is relatively low and cannot meet the shooting needs of users.

Therefore, providing an image processing method that enhances the functionality and intelligence level of in-vehicle cameras is a significant technical challenge that needs to be addressed.

## TECHNICAL PROBLEM

One objective of the present application is to provide an image processing method and device, a terminal device, and a storage medium that enhance the functionality and intelligence level of in-vehicle cameras.

## TECHNICAL SOLUTIONS

The technical solutions adopted in embodiments of the present application are as follows:
In a first aspect: an image processing method is provided, which includes:

obtaining vehicle target information of a vehicle and a first image set shot by at least two camera devices located inside the vehicle, in which the at least two camera devices are positioned at different locations inside the vehicle, and the vehicle target information includes at least one of current speed information of the vehicle, location information of the vehicle, or the environmental information where the vehicle is located;

performing image processing on the first image set based on the vehicle target information to obtain a second image corresponding to the first image set, in which the image processing includes at least one of noise reduction, color correction, and clarity processing; and
controlling a display device inside the vehicle to display the second image.

In a second aspect: an image processing device is provided, which includes:

an image obtaining module, configured to obtain vehicle target information of a vehicle and a first image set shot by at least two camera devices located inside the vehicle, in which the at least two camera devices are positioned at different locations inside the vehicle, and the vehicle target information includes at least one of current speed information of the vehicle, location information of the vehicle, or the environmental information where the vehicle is located;
an image processing module, configured to perform image processing on the first image set based on the vehicle target information to obtain a second image corresponding to the first image set, in which the image processing includes at least one of noise reduction, color correction, and clarity processing; and
a display control module, configured to control a display device inside the vehicle to display the second image.

In a third aspect: a terminal device is provided, which includes: a memory, a processor, and a computer program stored in the memory and capable of running on the processor which, when executed by the processor, cause the processor to perform the image processing method described in the first aspect.

In a fourth aspect: a computer-readable storage medium is provided, storing a computer program which, when executed by a processor, cause the processor to perform the image processing method described in the first aspect.

In a fifth aspect: a computer program product is provided, which, when executed on a terminal device, causes the terminal device to perform the image processing method described in the first aspect.

## BENEFICIAL EFFECTS

Compared to the prior art, the first aspect of the present application has the following beneficial effects: the vehicle target information and the first image set shot by at least two camera devices inside the vehicle are first obtained, and then the first image set is processed based on the vehicle target information to obtain the second image, and the display device inside the vehicle is controlled to display the second image, the present application enriches the functionality of in-vehicle cameras and improves the intelligence level. Unlike vehicles equipped with a single camera, the present application enhances functionality by positioning the plurality of camera devices at different locations inside the vehicle.

It is understood that the beneficial effects of the second to fifth aspects can be referenced in the related descriptions of the first aspect and will not be elaborated upon here.

## BRIEF DESCRIPTION OF THE DRAWINGS

In order to explain the embodiments of the present application more clearly, a brief introduction regarding the accompanying drawings that need to be used for describing the embodiments of the present application or the prior art is given below; it is obvious that the accompanying drawings described as follows are only some embodiments of the present application, for those skilled in the art, other drawings can also be obtained according to the current drawings on the premise of paying no creative labor.

FIG. 1 is a schematic diagram of an application scenario for an image processing method provided in one embodiment of the present application;
FIG. 2 is a flowchart of an image processing method provided in one embodiment of the present application;
FIG. 3 is a flowchart of a method for processing the first image set provided in one embodiment of the present application;
FIG. 4 is a flowchart of a method for generating a three-dimensional image of a human body provided in one embodiment of the present application;
FIG. 5 is a schematic diagram of capturing images from two positions provided in one embodiment of the present application;
FIG. 6 is a flowchart of a method for controlling camera devices to shoot images provided in one embodiment of the present application;
FIG. 7 is a schematic diagram of a track with position sensors provided in one embodiment of the present application;
FIG. 8 is a flowchart of a method for controlling camera devices to shoot images provided in another embodiment of the present application;
FIG. 9 is a structural schematic diagram of an image processing device provided in one embodiment of the present application; and
FIG. 10 is a structural schematic diagram of a terminal device provided in one embodiment of the present application.

## DETAILED EMBODIMENTS

It should be understood that when the term "include" is used in this specification and the appended claims, they indicate the presence of stated features, integers, steps, operations, elements, and/or components, but do not preclude the presence or addition of one or more other features, integers, steps, operations, elements, components, and/or groups thereof.

Currently, vehicles are often not equipped with cameras, or if cameras are present, they are used to collect information about the driver. These cameras cannot be used by non-driving users for photography. Therefore, existing vehicle cameras fail to meet various user needs. The present application provides an image processing method that utilizes at least two camera devices in the vehicle, satisfying both driver information collection and non-driver photography needs, thereby the automation level of vehicles is improved.

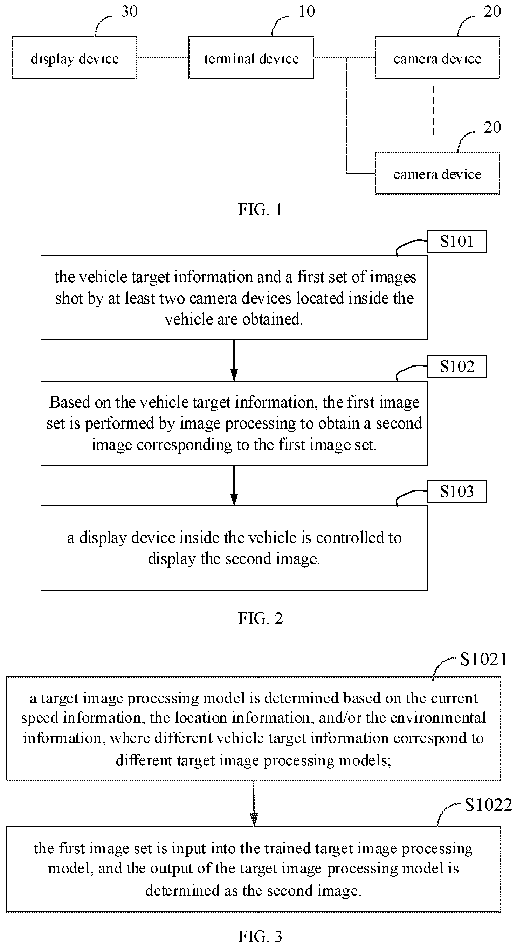

FIG. 1 illustrates a schematic diagram of an application scenario for an image processing method provided in one embodiment of the present application. The method can be used to shoot images inside the vehicle. Among them, at least two camera devices 20 are arranged inside the vehicle, with at least two camera devices 20 positioned at different locations within the vehicle. The terminal device 10 controls the at least two camera devices 20 to shoot the first image.

The terminal device 10 is configured to obtain the current speed information collected by the vehicle speed sensor of the vehicle, the positioning information collected by the positioning device of the vehicle, and the environmental information collected by the environment collection device of the vehicle. The environment collection device may include light sensors, temperature sensors, humidity sensors, etc.

The terminal device 10 is also configured to control the display device 30 inside the vehicle to display the second image obtained after processing the first image by the terminal device 10.

FIG. 2 shows the flowchart of the image processing method provided in the present application. As shown in FIG.2, the detailed description of the method is as follows:
In a step S101: the vehicle target information and a first set of images shot by at least two camera devices located inside the vehicle are obtained.

In the embodiment, the images shot by each camera device in the vehicle are referred to as the first image, and the at least two first images shot by the at least two camera devices are referred to as the first image set.

In the embodiment, the vehicle target information can include one or more of current speed information of the vehicle, location information of the vehicle, or the environmental information where the vehicle is located. Additionally, it may include other information characterizing vehicle attributes, such as the vehicle ignition status, remaining battery power of the vehicle, and fuel level, etc. Specifically, at least two camera devices are arranged at different positions inside the vehicle. The positions of the camera devices can be moved freely. Since at least two camera devices are positioned at different locations inside the vehicle, each first image is an image from different angles within the vehicle. It should be noted that in the embodiment, the positions of the plurality of camera devices are not limited. For example, two camera devices can be positioned adjacent to each other, both pointing towards the rear seats, or two cameras can be arranged with overlapping shooting areas to shoot the rear seat images as fully as possible. The embodiment does not restrict whether the shooting area of the camera is inside or outside the vehicle, nor does it restrict the installation method of the cameras, whether fixed inside the vehicle or adjustable based on actual shooting needs.

Specifically, the camera devices can include RGB cameras, which can shoot color images. The cameras can use lenses with resolutions higher than 10 megapixels and be encased in packaging material of PVC materials. The camera devices can be arranged on the dashboard inside the vehicle, interior walls of the vehicle, etc.

In the embodiment, the first image set can consist of images shot simultaneously by at least two camera devices, or images shot at different times by at least two camera devices.

Optionally, the camera devices can be placed inside a camera storage box. The terminal device can control the opening of the camera storage box to activate the camera devices and control the closing of the camera storage box to deactivate the camera devices.

S102: Based on the vehicle target information, the first image set is performed by image processing to obtain a second image corresponding to the first image set.

In the embodiment, the image processing includes at least one of denoising, color correction, clarity enhancement, and High Dynamic Range Imaging (HDR).

By performing image processing on the first images in the first image set, better quality and more effective images can be obtained.

Specifically, as shown in FIG. 3, the embodiment provides a specific implementation method for performing image processing on the first image set based on the vehicle target information to obtain the second image corresponding to the first image set, as follows:

> S1021: a target image processing model is determined based on the current speed information, the location information, and/or the environmental information, where different vehicle target information correspond to different target image processing models;
> S1022: the first image set is input into the trained target image processing model, and the output of the target image processing model is determined as the second image.

Exemplarily, the inventors consider that different image processing models require different computing capabilities of the processor (chip), and different computational examples lead to different chip costs. Therefore, the embodiment further provides a target image processing model adaptation scheme, different image processing models are arranged for different vehicle target information, to determine the chip with adapted computing power based on the vehicle target information, thereby meeting the image processing requirements at a lower cost.

Specifically, when the vehicle target information is the current speed information, the terminal device can pre-construct a model library for storing a plurality of target image processing models, each corresponding to a preset speed range. Therefore, the terminal device can search the pre-constructed model library for the target image processing model matching the target movement speed of the camera during shooting. The preset speed range can be set as actual needed, without limitation here. For example, the preset speed range can be set to: (0,10), [10,30), (30,40], (40,60], (60,80], (80,100], (100,120], and (120,+∞), with any speed in these ranges measured in km/h.

The terminal device can determine the target speed range based on the target movement speed, and then find the target image processing model corresponding to the image to be processed from the pre-constructed model library based on the target speed range.

In another embodiment of the present application, the terminal device constructs the model library through the following steps:

> In a step ①: obtaining original sample images corresponding to each of a plurality of preset speed ranges.
> In a step ②: for each of the plurality of preset speed ranges, taking the corresponding original sample images as a training set to train and obtain the target image processing model corresponding to the plurality of preset speed ranges.
> In a step ③: constructing and obtaining a model library using the target image processing models corresponding to each of the plurality of preset speed ranges.

In one implementation of the embodiment, the terminal device can pre-abtain a plurality of images taken by the camera at different movement speeds and classify these images based on the plurality of preset speed ranges and the movement speed of each image during shooting, to obtain original sample images corresponding to each of the plurality of preset speed ranges.

In the embodiment, after the terminal device obtains the original sample images corresponding to each of the plurality of preset speed ranges, to improve the success rate of subsequent image deblurring for the image to be processed, for each of the plurality of preset speed ranges, the terminal device only uses the original sample images corresponding to each of the plurality of preset speed ranges as the training set to train the preset original target image processing model, thereby the trained target image processing model corresponding to the preset speed range is obtained. The preset original target image processing model can be a pre-constructed first deep learning model.

After the target image processing models corresponding to each of the plurality of preset speed ranges are obtained, the terminal device can construct the model library using the target image processing models corresponding to each of the plurality of preset speed ranges.

In the embodiment, for each preset speed range, the terminal device can input the original sample images corresponding to the preset speed ranges into a preset original image deblurring model for processing to obtain pre-processed sample images. The original image deblurring model can be a pre-constructed first deep learning model, such as a DeblurGAN model.

After the pre-processed sample images are obtained, the terminal device can use edge detection algorithms to process the original sample images and the pre-processed sample images, respectively, so as to obtain a first operator corresponding to the original sample image and a second operator corresponding to the pre-processed sample image. The edge detection algorithms include but are not limited to Sobel edge detection algorithm, Canny edge detection algorithm, or Laplacian edge detection algorithm.

In one embodiment of the present application, taking the Sobel edge detection algorithm as an example, the terminal device can calculate the loss function using the following formula:

$$Lsobel = Y\_sobel - \Pr edict\_sobel ;$$

where $Lsobel$ represents the loss function, $\Pr edict\_sobel$ represents the first operator corresponding to the original sample image, and $Y\_sobel$ represents the second operator corresponding to the pre-processed sample image.

In the embodiment, after the loss function is obtained, the terminal device can use the loss function as a backpropagation error to update the network weights in the original image deblurring model, i.e., to optimize the parameters of the original image deblurring model based on the loss function, thereby the image deblurring model corresponding to the preset speed range is obtained.

As can be seen, the embodiment provides an image deblurring method, when training the original image deblurring model corresponding to each preset speed range, the original sample images corresponding to each preset speed range are input into the preset original image deblurring model for processing to obtain pre-processed sample images. Then, edge detection algorithms are used to process the pre-processed sample images and the original sample images, respectively, to obtain the first operator corresponding to the original sample image and the second operator corresponding to the pre-processed sample image. Based on the first operator and the second operators, the loss function is obtained and used as a backpropagation error to optimize the parameters of the original image deblurring model, to achieve the purpose of strengthening the edge part in the original sample image by the original deblurring model,, thereby obtaining the trained image deblurring model. The resulting image deblurring model can provide higher image clarity and improve the quality of the deblurred images.

Additionally, in the embodiment, the vehicle target information can also include positioning information and environmental information. Similarly, the embodiment can set different positioning information corresponding to different image processing models, and can also set different environmental information corresponding to different image processing models. Moreover, a combination of multiple target information can correspond to different image processing models.

For example, different locations such as underground parking lots, tunnels, and road surfaces can correspond to different image processing models based on the positioning information. Different environmental information such as good lighting, poor lighting, rainy days, and sunny days can also correspond to different image processing models.

In a step S 103: a display device inside the vehicle is controlled to display the second image.

In the embodiment, the display device can include a display screen. Displaying the second image on the display device allows the user to view the multi-angle images in a timely manner. The second image can be one or more. After displaying each second image on the display device, the user can select the desired image based on the second images. Upon receiving the send signal, the second image selected by a user can be sent to a device of the user via Bluetooth or a local area network within the vehicle. The device of the user can include a mobile phone, tablet, etc. Additionally, the terminal device can also send the second image to cloud storage through the gateway inside the vehicle.

In the embodiment, after the second image is displayed on the display device, if a first operation on the beautification control is detected, the second image is processed according to the processing mode corresponding to the beautification control to obtain a processed third image. The processing modes can include beautification processing, filter addition processing, sticker addition processing, matting processing, etc.

In the embodiment, obtaining vehicle target information and the first image shot by at least two imaging devices inside the vehicle, compared to the technology with only one imaging device installed on the vehicle, the present application sets a plurality of imaging devices at different positions inside the vehicle, which can meet needs of the user for multi-angle shooting, the functions of in-vehicle cameras are enriched, and the level of intelligence level is improved; the present application processes the first image based on the vehicle target information to obtain the second image, which can improve the image effect of the first image collected by the imaging device. Compared to the existing technology where the first image collected by the imaging device is directly displayed, the present application can obtain images with better effects; therefore, the present application can meet needs of the user for shooting.

In one possible implementation, after the step S 101, the method can further include:

In a step S201, the first images in the first image set is screened to obtain a third image.

In the embodiment, the third image is an image in the first image that includes human body information. After the third image is obtained, the third image can be input into the trained target image processing model, and the output of the target image processing model is determined to be the second image.

In the embodiment, the human body information can include the face information and human body information of the user. The face information can be a side face or a frontal face.

Specifically, screening the first image can include: inputting the first image into a neural network model, recognizing the first image to determine whether the human body information exists the first image. If there is human body information in the first image, the first image is used as the third image; if there is no human body information in the first image, the first image is removed. The images with human body information are screened, which can meet the entertainment needs and photo-taking needs of the user.

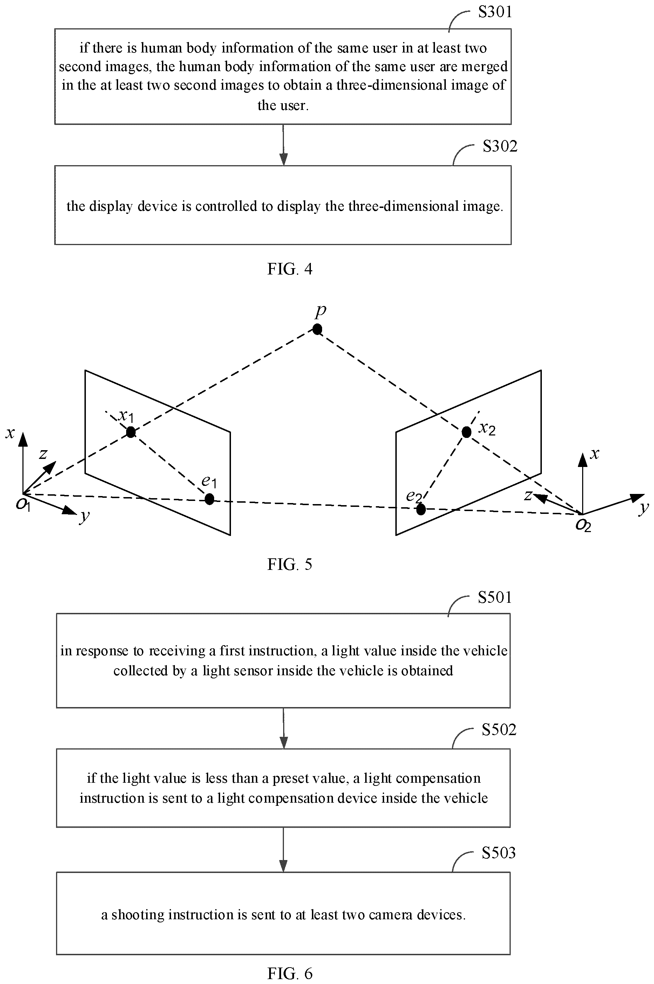

As shown in FIG. 4, in one possible implementation, after inputting the third image group into the trained target image processing model and determining the output of the target image processing model to be the second image, the method can further include:

S301, if there is human body information of the same user in at least two second images, the human body information of the same user are merged in the at least two second images to obtain a three-dimensional image of the user.

Specifically, after recognizing the human body information in the second image, matching each of human body information to determine the second images that include human body information of the same user, and using the second images that include human body information of the same user as a group of images. Merging the human body information in each group of images to obtain a three-dimensional image of the user.

Specifically, inputting each second image into the recognition model to obtain the second images that include human body information of the same user.

In a step S302, the display device is controlled to display the three-dimensional image.

In the embodiment, displaying the three-dimensional image of the human body on the display device allows the user to view the shot images from multiple angles, increasing human-computer interaction is increased, the interest in enhanced, and the needs of more users are met.

Specifically, the method of converting the second image into a three-dimensional image includes:

In a step S401, a sixth image of an in-vehicle space shot by a first camera device at a first shooting position is obtained.

In a step S402, a fourth image of the in-vehicle space shot by a second camera device at a second shooting position is obtained. The first image includes the sixth image and the fourth image.

In the embodiment, the first imaging device and the second imaging device can refer to different imaging devices installed at different shooting positions, or the same imaging device placed at different shooting positions.

As shown in FIG. 5, which is a schematic diagram of shooting at two positions provided in the embodiment.

As shown in FIG. 5, point p represents a space point in the in-vehicle space, Oixyz is the first camera coordinate system at the first shooting position, and $O_2xyz$ is the second camera coordinate system at the second shooting position, $x_1$ is the pixel point (i.e., the first feature point) in the sixth image corresponding to point p, and $x_2$ is the pixel point (i.e., the second feature point) in the fourth image corresponding to point p.

It should be noted that only one space point is shown in FIG. 5, and only one feature point is marked in the corresponding sixth image and fourth image. In fact, each of the sixth images and the fourth images includes a plurality of feature points, each feature point corresponding to a space point in the in-vehicle space.

In a step S403, a first transformation matrix is calculated based on a first feature point and a second feature point.

In the embodiment, the first feature point is a feature point in the sixth image, the second feature point is a feature point in the fourth image corresponding to the first feature point, and the first transformation matrix is the transformation matrix between the first camera coordinate system to which the first imaging device belongs and the second camera coordinate system to which the second imaging device belongs.

It should be noted that since the first transformation matrix includes a plurality of parameters, it is necessary to use a plurality of sets of feature points for calculating. Each set of feature points includes the first feature point and the second feature point corresponding to the first feature point. The calculation process of any set of feature points is introduced below.

In one embodiment, the calculating method of the first transformation matrix includes:

In a step S4031, feature point matching processing is performed on the sixth image and the fourth image to obtain the first feature point and the second feature point.

Optionally, existing algorithms such as the Scale-invariant feature transform (SIFT) algorithm or Speeded Up Robust Features (SUFT) algorithm can be used for feature point matching processing.

In a step S4032, the first feature point is converted to a first coordinate point and the second feature point is converted to a second coordinate point based on a preset internal parameter matrix, and the internal parameter matrix represents a conversion relationship between an image coordinate system and a camera coordinate system.

In the embodiment, the internal parameter matrix is pre-calibrated. The specific process is as follows: using the imaging device to shoot a preset calibration pattern, and calculating the internal parameter matrix based on the coordinates of the pixel points in the shot image. The internal parameter matrix K is:

$$\mathrm{K} = \begin{bmatrix} f & 0 & c_x \\ 0 & f & c_y \\ 0 & 0 & 1 \end{bmatrix};$$

where f is the camera focal length, $c_x$ is the horizontal coordinate of the image center, and $c_y$ is the vertical coordinate of the image center.

After the internal parameter matrix is obtained, the first coordinate point and the second coordinate point are calculated according to the following formulas:

$$K^{-1}x_1 = x_1';$$

$$K^{-1}x_2 = x_2';$$

where $x_1$ and $x_2$ are the corresponding points on the sixth image and the fourth image respectively, and $x_1'$ and $x_2'$ are the transformed first coordinate point and second coordinate point respectively. It should be noted that when the first imaging device and the second imaging device are the same device, the same K is used in the above two formulas; when the first imaging device and the second imaging device are different devices, the K in the above two formulas respectively refers to the internal parameter matrix corresponding to the first imaging device and the second imaging device.

In a step S4033, the first transformation matrix is calculated according to the first coordinate point and the second coordinate point.

In the above method, since the internal parameter matrix is pre-calibrated, the calculation time of the first transformation matrix can be effectively saved.

Optionally, one implementation of the step S4033 is:

the essential matrix is calculated according to the first coordinate point and the second coordinate point; and the first transformation matrix is decomposed from the essential matrix. The essential matrix represents the conversion relationship between the first camera coordinate system and the second camera coordinate system.

For example, assuming the first camera coordinate system is determined as the world coordinate system. The essential matrix E is calculated according to the epipolar constraint equation $x_1'Ex_2' = 0$. Since the essential matrix E includes five parameters containing the rotation parameter and and the translation parameter, at least five pairs of first coordinate points and second coordinate points are needed to substitute into the above epipolar constraint equation to calculate the essential matrix. After the essential matrix is calculated, the matrix decomposition (such as SVD decomposition, etc.) can be performed on the essential matrix to obtain the first transformation matrix, and the first transformation matrix includes the rotation matrix $R_2$ and translation matrix $T_2$.

Through the aforementioned method, the first transformation matrix can be obtained using simple mathematical methods (i.e., matrix decomposition). Since the calculation method of matrix decomposition is relatively simple, it can effectively reduce computational complexity.

In a step S404, the three-dimensional coordinates of the first spatial point in the in-vehicle space is calculated based on the first transformation matrix.

Here, the first spatial point corresponds to the spatial point indicated by the first feature point and the second feature point.

In one embodiment,the step S404 includes: obtaining a first distance between a position of the first spatial point in the in-vehicle space and the second camera device; and calculating the three-dimensional coordinates of the first spatial point based on the first distance, the preset internal parameter matrix, and the first transformation matrix.

In the embodiment, the first distance can be obtained through laser ranging assistance.

For example, the model equation of the second camera device can be established as follows:

$$s_2x_2 = K(R_2X + T_2);$$

where $s_2$ represents the first distance, $x_2$ represents the second feature point in the fourth image, K represents the internal parameter matrix, and $R_2$ and $T_2$ represents the first transformation matrix. $X$ represents the three-dimensional coordinates of the spatial point corresponding to the second feature point $x_2$.

Transforming the above equation to obtain:

$$\widehat{x_2}K(R_2 + T_2)\begin{pmatrix} X \\ 1 \end{pmatrix} = 0$$

, using SVD algorithm to find the null space of the matrix $\widehat{x_2}K(R_2 + T_2)$ to yield the $X$. Through this method, the three-dimensional coordinates of each second feature point in the fourth image can be calculated.

Through this method, using simple mathematical methods (i.e., matrix calculation), the three-dimensional coordinates can be determined, effectively reducing computational complexity.

In a step S405, the three-dimensional scene of the in-vehicle space is constructed based on the three-dimensional coordinates of the first spatial point.

By determining the positions of a plurality of first spatial points in the in-vehicle space through their three-dimensional coordinates, a three-dimensional scene of the in-vehicle space can be constructed using the plurality of first spatial points.

In the embodiment, the sixth image and fourth image are obtained through the camera devices located in different positions for shooting in the in-vehicle space; the transformation matrix between the camera coordinate systems to which different camera devices belong is calculated based on the sixth image and fourth image, and then the three-dimensional coordinates of the spatial points in the in-vehicle space are calculated according to the transformation matrix. Finally, the three-dimensional scene of the in-vehicle space is constructed based on the three-dimensional coordinates of the spatial points in the in-vehicle space. Through this method, a precise three-dimensional scene of the vehicle interior can be constructed even in the absence of depth information, which facilitates accurate determination of the location of target objects within the cabin.

In order to improve the accuracy of constructing the three-dimensional scene, a multi-position joint calculation method is proposed in one embodiment. Specifically, the step S405 includes:
In a step S4051, a fifth image of the in-vehicle space is obtained, and the fifth image is shot by a third camera device.

In the embodiment, the third camera device, the first camera device, and the second camera device may refer to different camera devices installed in different shooting positions or the same camera device placed in different shooting positions.

In a step S4052, a second transformation matrix is determined based on a third feature point and a fourth feature point.

In the embodiment, the third feature point is a feature point in the fourth image, and the fourth feature point is a feature point in the fifth image corresponding to the second feature point, and the second transformation matrix is a transformation matrix between the third camera coordinate system to which the third camera device belongs and a second camera coordinate system to which the second camera device belongs. As the same in step S4031, existing feature matching algorithms can be used to process feature points in the fifth image and the fourth image, to obtain the third feature point and the fourth feature point. Similarly, the fourth image contains a plurality of third feature points, and the fifth image contains a plurality of fourth feature points that match each of the plurality of third feature points.

It should be noted that the third feature points obtained after matching feature points between the fourth and fifth images may include the fifth feature points. The fifth feature points are feature points in the third feature points that belong to the second feature points. In other words, some feature points in the fourth image match both feature points in the sixth image and feature points in the fifth image; these feature points are the fifth feature points. The remaining feature points in the fourth image that do not match the sixth image but match the fifth image are the new added feature points. The three-dimensional coordinates corresponding to the fifth feature points are determined in the previous steps, which allows the position of the third camera device to be corrected based on the fifth feature points.

An optional method for calculating the second transformation matrix is as follows:
calculating a third shooting position of the third camera device based on three-dimensional coordinates of a spatial point corresponding to the fifth feature point; and calculating the second transformation matrix between the third camera coordinate system corresponding to the third shooting position and the second camera coordinate system corresponding to the second shooting position.

In practical applications, the second transformation matrix can be calculated using the solvePnP toolkit in OpenCV.

In a step S4053, three-dimensional coordinates of a second spatial point in the in-vehicle space is calculated based on the second transformation matrix, and the second spatial point is a spatial point corresponding to the third feature point and the fourth feature point.

As described in S4052, the fourth image includes the fifth points and new added feature points. After the position of the third camera device is corrected according to the method of step S4052, the three-dimensional coordinates of the spatial points corresponding to the fifth feature points in the second spatial points are consistent with the three-dimensional coordinates of the spatial points corresponding to the fifth feature points in the first spatial points. The spatial points in the second spatial points, except for those corresponding to the fifth feature points, are the spatial points corresponding to the new added feature points, which equivalent to determining the three-dimensional coordinates of more spatial points through the fifth image.

In a step S4054: the three-dimensional scene of the in-vehicle space is constructed based on the three-dimensional coordinates of the first spatial point and the second spatial point.

In the embodiment, images of the in-vehicle space corresponding to multiple shooting positions can be introduced after the step S4054, the three-dimensional coordinates of multiple spatial points in the in-vehicle space are calculated by jointly capturing images of the in-vehicle space corresponding to multiple shooting positions. The method for introducing the next shooting position is the same as the method in steps S4051-S4053, which will not be repeated here.

In the embodiment, by introducing a plurality of shooting positions and jointly calculating using the plurality of shooting positions can effectively reduce cumulative position errors, thus the accuracy of constructing the three-dimensional scene is improved.

It should be noted that the more shooting positions introduced, the more number of spatial points can be determined, and the more accurate the three-dimensional coordinates of the calculated spatial points, thus a more precise three-dimensional scene can be constructed.

As the number of shooting positions introduced increases, accumulated errors will also increase. To reduce accumulated errors, in one embodiment, after the step S4054, the method further includes:

calculating a loss value corresponding to scene construction parameters based on a preset cost function, and the scene construction parameters include a preset internal parameter matrix, transformation matrices corresponding to each shooting position, three-dimensional coordinates of spatial points in the interior space of the vehicle, and pixel coordinates of each image of the spatial points in the interior space of the vehicle; and optimizing the scene construction parameters based on a gradient descent method and the loss value.

The cost function can be expressed as follows: $f_i(K_i, R_i, T_i, P_j) = \pi(K_i[R_iT_i]P_j] - p_j^i)$, where $K_i$ is the internal parameter matrix of the $i^{th}$ camera device, $R_i$ and $T_i$ are the transformation matrices corresponding to the $i^{th}$ shooting position, $P_j$ is the coordinate of a spatial point in the in-vehicle space, $p_j^i$ is the pixel coordinate of the point in the $i^{th}$ image, and $\pi$ is the projection function. It should be noted that when using a single camera device moved to different shooting positions to shoot images of the in-vehicle space, $K_i$ and $K_{i+1}$ in above formula are the same internal parameter matrix.

Base                                                on

$$\min_x \sum_i \rho_i \left( \left| \left| f_i(x_{i1}, x_{i2}, \dots, x_{ik}) \right| \right| \right)^2$$

to optimize. Here, $\rho_i$ is the loss function corresponding to the $i^{th}$ shooting position.

As shown in FIG. 6, in a possible implementation, before the step S101, the method may further include:

In a step S501, in response to receiving a first instruction, a light value inside the vehicle collected by a light sensor inside the vehicle is obtained.

In the embodiment, the first instruction can be generated by a second operation of a button on the vehicle. The second operation can be a pressing action by the user. The first instruction can also be generated by a third operation on a control element on a display device of the vehicle. The third operation can be a touching action by the user.

In the embodiment, in order to obtain clearer images when shooting, the light value inside the vehicle can be detected before shooting. Specifically, after receiving the first instruction, the terminal device obtains the light value inside the vehicle collected by the internal light sensor of the vehicle.

In a step S502, if the light value is less than a preset value, a light compensation instruction is sent to a light compensation device inside the vehicle.

In the embodiment, the light compensation instruction is configured to instruct the light compensation device to provide lighting for the environment inside the vehicle.

In the embodiment, the preset value can be set as needed.

In the embodiment, in order to obtain clearer images, the light compensation device can be set inside the vehicle. When the in-vehicle light is poor, the light compensation can be performed when shooting to obtain clearer images.

In the embodiment, the light compensation device can be a lighting lamp installed on the top of the vehicle, utilizing the existing lighting lamp in the vehicle as the light compensation device, which saves resources and space without the need to add additional equipment inside the vehicle.

Alternatively, a plurality of light compensation devices can be provided, each of the plurality of light compensation devices is installed on a camera device. When a camera device needs to shoot and if the light inside the vehicle is poor, the corresponding light compensation device of that camera can be turned on to provide light compensation.

Alternatively, when the light compensation device is the lighting lamp inside the vehicle, if the light value is less than the preset value, determining the light interval in which the light value falls, with each light interval corresponding to a light compensation brightness level. Checking whether the interior lighting lamp is turned on, and if yes, adjusting the brightness of the lighting lamp according to the determined light compensation brightness level. If the lighting lamp is off, the lighting lamp is needed controlling to be turned on at the determined light compensation brightness level.

For example, if the current light value inside the vehicle is 5, the light interval being ranged from 4 to 6 corresponds to light compensation brightness of level 2. If the lighting lamp is turned on, the lighting lamp is controlled to be adjusted to brightness level 2. If the lighting lamp is turned off, the lighting lamp is controlled to be turned on at brightness level 2.

Alternatively, if the light value is less than the preset value, a light compensation reminder message can be sent to prompt the user to turn on the light compensation device.

In the embodiment, if the light value is greater than or equal to the preset value, it is determined that light compensation is not needed.

In a step S503, a shooting instruction is sent to at least two camera devices.

In the embodiment, the shooting instruction is configured to instruct at least two camera devices to each shoot a first image. At least two camera devices can be randomly selected by the terminal device.

Optionally, the internal human detection device of the vehicle can be controlled to detect the position of the human body inside the vehicle, and then at least two camera devices within a preset range from the detected human position can be controlled to shoot to obtain clearer images containing human information.

Optionally, the fourth operation of the user on the control element corresponding to each camera device can be monitored. If a user operation on a control element corresponding to a camera device is detected, it is determined that the camera device needs to shoot the first image, and the terminal device sends a shooting instruction to that camera device.

For example, if the vehicle is provided with a camera device A, a camera device B, and a camera device C; the camera device A corresponds to a control element a, the camera device B corresponds to a control element b, and the camera device C corresponds to a control element c. if the terminal device detects operations on the control element b and the control element c, then shooting instructions are sent to the camera device B and the camera device C, such that the camera device B and the camera device C are controlled to shoot.

In one possible implementation, the roof inner wall of the vehicle is provided with a track. The track can be elliptical, circular, or a straight line, set as needed.

In the embodiment, at least one camera device is slidingly connected to the track. The user can manually move the camera device along the track to select the desired shooting angle, so as to obtain images from multiple angles.

Specifically, the process of implementing step S503 may include:
In a step S5031, if there are at least two camera devices slidingly connected to the track inside the vehicle, the shooting instruction is sent to the at least two camera devices connected to the track.

In the embodiment, if at least two camera devices are slidingly connected to the track, the shooting instructions can be sent directly to the camera devices connected to the track. Optionally, shooting instructions can also be sent to camera devices not connected to the track.

For example, if the camera device A and the camera device B are slidingly connected to the track, the shooting instructions will be sent to the camera device A and the camera device B.

In a step S5032: if there is one camera device slidingly connected to the track inside the vehicle, the shooting instruction is sent to the one camera device connected to the track and to at least one camera device not connected to the track.

In the embodiment, if only one camera device is connected to the track, the shooting instructions need to be sent to both the camera device connected to the track and the camera device not connected to the track.

Specifically, the at least one camera device not connected to the track can be any selected camera device or a camera device selected by the user. The information of the camera device selected by the user not connected to the track is obtained, and shooting instructions are sent to the camera device selected by the user not connected to the track.

For example, if camera device A is connected to the track, and the camera device B and the camera device C are not connected to the track, the shooting instructions are sent to camera device A, and to the camera device B and the camera device C or to one of the camera device B and the camera device C.

In one possible implementation, the roof inner wall of the vehicle is provided with a track, and there is one camera device slidingly connected to the track inside the vehicle, a plurality of position sensors are provided on the track at different positions, and the plurality of position sensors are configured to send a first signal after position information of the one camera device slidingly connected to the track is detected.

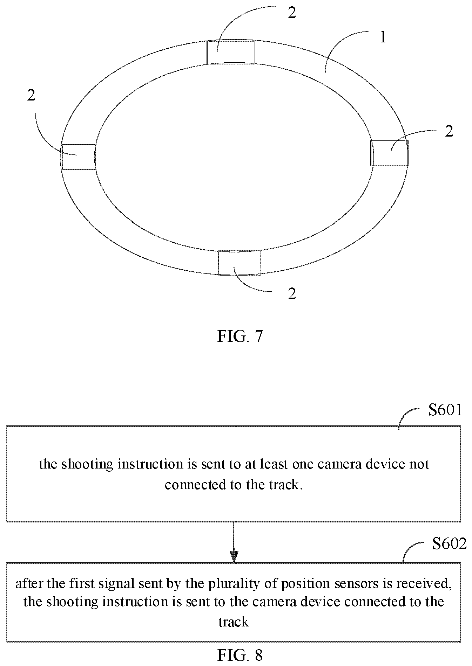

For example, as shown in FIG.7, the track 1 is provided with four position sensors 2, and the positions of the four position sensors 2 are set as needed.

In the embodiment, when the camera device on the track touches the position sensor(s), the sensor(s) sends the first signal to the terminal device.

As shown in FIG. 8, the process of implementing step S503 may include:

In a step S601, the shooting instruction is sent to at least one camera device not connected to the track.
In a step S602, after the first signal sent by the plurality of position sensors is received, the shooting instruction is sent to the camera device connected to the track.

In the embodiment, several position points can be set on the track for shooting when the camera device is located at these positions. The position sensors are configured to detect the positions of the camera device, so as to achieve the effect of automatically shooting when the camera device reaches specified positions.

In one possible implementation, after each second image is obtained, the method may further include:
In a step S701, if the human body information in the second image includes human body information of a driver, determining whether a driving posture of the driver meets a preset posture requirement based on the human body information of the driver.

In the embodiment, the preset posture requirement can include holding the steering wheel with both hands, not holding a mobile phone to talk, not looking down, wearing a seat belt, etc.

Specifically, the position of the user in the vehicle can determine whether the human body information in the second image belongs to the driver. Alternatively, it can be determined whether the second image contains the human body information of the driver by equipment surrounding the human body information, such as whether the steering wheel is existed or not.

In the embodiment, the driving posture of the driver is identified, and the driving posture included in the human body information in the second image is compared with the preset posture requirement to determine whether the driving posture of the driver meets the preset posture requirement.

In the embodiment, if the human body information of the driver is present in a plurality of second images, the driving posture of the driver can be more accurately determined whether the driving posture of the driver meets the preset posture requirement by using a plurality of human body information of the driver, so as to prevent inaccurate judgment due to obstruction of the driving posture of the driver in a single image.

S702, if the driving posture of the driver does not meet the preset posture requirement, sending a first reminder message.

In the embodiment, the first reminder message is configured to remind the driver to adjust the driving posture. The first reminder message can be played in the form of a voice message.

S703: if the human body information in the second image comprises human body information of a passenger, it is determined whether the passenger is wearing a seat belt based on the human body information of the same passenger.

In the embodiment, it is determined whether the second image contains the human body information of a passenger involves identifying users in the vehicle other than the driver. Specifically, the human body information of the passenger in the second image can be determined by the position of the human body in the second image within the vehicle; it can also be determined by the equipment around the human body in the second image.

If the second image contains the human body information of the passenger, checking other second images for the presence of the human body information of the passenger. If the other second images do not contain the human body information of the passenger, it is determined whether the passenger is wearing a seat belt based on the current second image. If the human body information of the passenger exists other second images, it is determined whether the passenger is wearing a seat belt based on all the human body information corresponding to the passenger. By using the human body information of the passenger from different angles, it is possible to more accurately determine whether the passenger is wearing a seat belt and reduce errors caused by obstruction.

In a step S704, if the passenger is not wearing a seat belt, sending a second reminder message.

In the embodiment, the second reminder message is configured to remind the passenger to fasten their seat belts. The second reminder message can be played in the form of a voice message.

It should be understood that the sequence numbers of the steps in the above embodiments do not imply the order of execution. The execution order of each process should be determined by its function and internal logic and should not be construed as limiting the implementation process of the embodiments of the present application.

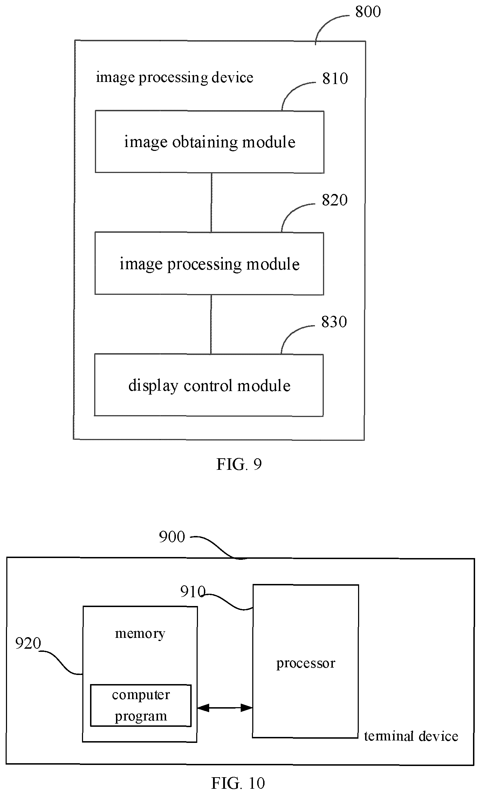

Corresponding to the image processing method described in the above embodiments, FIG. 9 shows a structural block diagram of an image processing device provided by the embodiments of the present application. For convenience of illustration, only the parts related to the embodiments of the present application are shown.

As shown in FIG. 9, the device 800 may include: an image obtaining module 810, an image processing module 820, and a display control module 830.

The image obtaining module 810 is configured to obtain vehicle target information of a vehicle and a first image set shot by at least two camera devices located inside the vehicle, and the at least two camera devices are positioned at different locations inside the vehicle, and the vehicle target information comprises at least one of current speed information of the vehicle, location information of the vehicle, or the environmental information where the vehicle is located;

The image processing module 820 is configured to perform image processing on the first image set based on the vehicle target information to obtain a second image corresponding to the first image set, and the image processing comprises at least one of noise reduction, color correction, and clarity processing; and

The display control module 830 is configured to control a display device inside the vehicle to display the second image.

In one possible implementation, the image processing module 820 can specifically be configured to:

determine a target image processing model based on the current speed information, the location information, and/or the environmental information, and different vehicle target information correspond to different target image processing models; and

input the first image set into a trained target image processing model and determining that an output of the target image processing model is the second image.

In one possible implementation, the image obtaining module 810 is also connected to:

a screening module configured to screen a first images in the first image set to obtain a third image, and the third image is an image from the first image set that includes human body information, and the first image set includes at least two first images;

Accordingly, the image processing module 820 can specifically be configured to:

input the third image into the trained target image processing model and determine that the output of the target image processing model is the second image.

In one possible implementation, the image obtaining module 810 is also connected to:

a light determination module configured to obtain a light value inside the vehicle collected by a light sensor inside the vehicle in response to receiving a first instruction;

a light compensation module configured to send a light compensation instruction to a light compensation device inside the vehicle if the light value is less than a preset value, and the light compensation instruction is configured to instruct the light compensation device to provide additional lighting to an environment inside the vehicle; and

a instruction sending module configured to send a shooting instruction to the at least two camera devices, and the shooting instruction is configured to instruct the at least two camera devices to shoot the first images respectively.

In one possible implementation, the image processing module 820 is also connected to:

an image merging module configured to merge the human body information of the same user in the at least two second images to obtain a three-dimensional image of the user if the human body information of a same user exists at least two of the second images; and

a display module configured to control the display device to display the three-dimensional image.

In one possible implementation, a roof inner wall of the vehicle is provided with a track;

Specifically, the instruction sending module can be configured to:

if there are at least two camera devices slidingly connected to the track inside the vehicle, sending the shooting instruction to the at least two camera devices connected to the track; and

if there is one camera device slidingly connected to the track inside the vehicle, sending the shooting instruction to the one camera device connected to the track and to at least one camera device not connected to the track.

In one possible implementation, a roof inner wall of the vehicle is provided with a track, and there is one camera device slidingly connected to the track inside the vehicle, a plurality of position sensors are provided on the track at different positions, and the plurality of position sensors are configured to send a first signal after position information of the one camera device slidingly connected to the track is detected;.

Specifically, the instruction sending module can be configured to:

send the shooting instruction to at least one camera device not connected to the track; and

send the shooting instruction to the one camera device connected to the track after receiving the first signal from the plurality of position sensors.

In one possible implementation, the image obtaining module 810 is also connected to:

a driver information determination module configured to determine whether a driving posture of the driver meets a preset posture requirement based on the human body information of the driver if the human body information in the second image includes human body information of the driver;

a first information sending module configured to send a first reminder message to remind the driver to adjust the driving posture if the driving posture of the driver does not meet the preset posture requirement;

a passenger information determination module configured to determine whether the passenger is wearing a seat belt based on the human body information of the same passenger if the human body information in the second image comprises human body information of a passenger; and

a second information sending module configured to send a second reminder message to prompt the passenger to wear the seat belt if the passenger is not wearing a seat belt.

It should be noted that the information interaction and execution process between the above-mentioned devices/modules are based on the same concept as the method embodiments of the present application. Their specific functions and the technical effects they bring can be referred to in the method embodiments section, which is not be repeated here.

It can be clearly understood by those skilled in the art that, for describing conveniently and concisely, dividing of the aforesaid various functional units, functional modules is described exemplarily merely, in an actual application, the aforesaid functions can be assigned to different functional units and functional modules to be accomplished, that is, an inner structure of a data synchronizing device is divided into functional units or modules so as to accomplish the whole or a part of functionalities described above. The various functional units, modules in the embodiments can be integrated into a processing unit, or each of the units exists independently and physically, or two or more than two of the units are integrated into a single unit. The aforesaid integrated unit can by either actualized in the form of hardware or in the form of software functional units. In addition, specific names of the various functional units and modules are only used for distinguishing from each other conveniently, but not intended to limit the protection scope of the present application. Regarding a specific working process of the units and modules in the aforesaid device, reference can be made to a corresponding process in the aforesaid method embodiments, which is not repeatedly described herein.

The embodiment of the present application also provides a terminal device. As shown in FIG. 10, the terminal device 900 may include: at least one processor 910, a memory 920, and a computer program stored in the memory 920 and executable on the at least one processor 910. The processor 910, which when executing the computer program, performs the steps in any of the method embodiments, such as steps S101 to S103 in the embodiment shown in FIG. 2. Alternatively, the processor 910, which when executing the computer program, implements the functions of each module/unit in the above device embodiments, such as the functions of modules 810 to 830 shown in FIG. 9.

Exemplarily, the computer program can be divided into one or more modules/units, which are stored in the memory 920 and executed by the processor 910 to complete the present application. These one or more modules/units can be a series of computer program segments capable of completing specific functions. These segments describe the execution process of the computer program in the terminal device 900.

Those skilled in the art will understand that FIG. 10 is merely an example of the terminal device and does not constitute a limitation of the terminal device. It may include more or fewer components than shown, or combine certain components, or different components, such as input and output devices, network access devices, buses, etc.

The processor 910 can be CPU (Central Processing Unit), and can also be other general purpose processor, DSP (Digital Signal Processor), ASIC (Application Specific Integrated Circuit), FGPA (Field-Programmable Gate Array), or some other programmable logic devices, discrete gate or transistor logic device, discrete hardware component, etc. The general purpose processor can be a microprocessor, or alternatively, the processor can also be any conventional processor and so on.

The memory 920 can be an internal storage unit of the terminal device or an external storage device, such as a plug-in hard drive, Smart Media Card (SMC), Secure Digital (SD) card, Flash Card, etc. The memory 920 is configured to store the computer program and other programs and data required by the terminal device. The memory 920 can also be used to temporarily store data that has been output or will be output.

The bus can be an Industry Standard Architecture (ISA) bus, Peripheral Component (PCI) bus, or Extended Industry Standard Architecture (EISA) bus, etc. The bus can be divided into an address bus, data bus, control bus, etc. For convenience, the bus shown in the drawings of the present application is not limited to only one type of bus.

The image processing method provided in the present application can be applied to computers, tablets, laptops, netbooks, personal digital assistant (PDA), and other terminal devices, the present application does not limit the specific type of terminal device.

In the embodiments of the present application, the descriptions of the embodiments in the present application are emphasized respectively, regarding the part in some embodiments which is not described in detail, reference can be made to related descriptions in other embodiments.

Those skilled in the art may aware that, the elements and algorithm steps of each of the examples described in connection with the embodiments disclosed herein can be implemented in electronic hardware, or in combination with computer software and electronic hardware. Whether these functions are implemented by hardware or software depends on the specific application and design constraints of the technical solution. The skilled people could use different methods to implement the described functions for each particular application, however, such implementations should not be considered as going beyond the scope of the present application.

It should be understood that, in the embodiments of the present application, the disclosed device/terminal device and method could be implemented in other ways. For example, the device described above are merely illustrative; for example, the division of the units is only a logical function division, and other division could be used in the actual implementation, for example, multiple units or components could be combined or integrated into another system, or some features can be ignored, or not performed. In another aspect, the coupling or direct coupling or communicating connection shown or discussed could be an indirect, or a communicating connection through some interfaces, devices or units, which could be electrical, mechanical, or otherwise.

The units described as separate components could or could not be physically separate, the components shown as units could or could not be physical units, which can be located in one place, or can be distributed to multiple network elements. Parts or all of the elements could be selected according to the actual needs to achieve the object of the present embodiment.

In addition, the various functional units in each of the embodiments of the present application can be integrated into a single processing unit, or exist individually and physically, or two or more than two units are integrated into a single unit. The aforesaid integrated unit can either be achieved by hardware, or be achieved in the form of software functional units.

If the integrated unit is achieved in the form of software functional units, and is sold or used as an independent product, it can be stored in a computer readable storage medium. Based on this understanding, a whole or part of flow process of implementing the method in the aforesaid embodiments of the present application can also be accomplished by using computer program to instruct relevant hardware. When the computer program is executed by the processor, the steps in the various method embodiments described above can be implemented.

If the integrated unit is implemented as a software functional unit and sold or used as an independent product, it can be stored in a computer-readable storage medium. Based on this understanding, all or part of the processes in the method embodiments can be implemented by instructing related hardware through a computer program. The computer program can be stored in a computer-readable storage medium, and when executed by one or more processors, it can implement the steps in the method embodiments.

Similarly, as a computer program product, when the computer program product runs on a terminal device, it enables the terminal device to execute the steps in the method embodiments.

The computer program includes computer program codes, which can be in the form of source code, object code, executable documents or some intermediate form, etc. The computer readable medium can include: any entity or device that can carry the computer program codes, recording medium, USB flash disk, mobile hard disk, hard disk, optical disk, computer storage device, ROM (Read-Only Memory), RAM (Random Access Memory), electrical carrier signal, telecommunication signal and software distribution medium, etc. It needs to be explained that, the contents contained in the computer readable medium can be added or reduced appropriately according to the requirement of legislation and patent practice in a judicial district, for example, in some judicial districts, according to legislation and patent practice, the computer readable medium doesn't include electrical carrier signal and telecommunication signal.

As stated above, the aforesaid embodiments are only intended to explain but not to limit the technical solutions of the present application. Although the present application has been explained in detail with reference to the above-described embodiments, it should be understood for the ordinary skilled one in the art that, the technical solutions described in each of the above-described embodiments can still be amended, or some technical features in the technical solutions can be replaced equivalently; these amendments or equivalent replacements, which won't make the essence of corresponding technical solution to be broken away from the spirit and the scope of the technical solution in various embodiments of the present application, should all be included in the protection scope of the present application.

**Claims**

1. An image processing method, comprising:

   obtaining vehicle target information of a vehicle and a first image set shot by at least two camera devices located inside the vehicle, wherein the at least two camera devices are positioned at different locations inside the vehicle, and the vehicle target information comprises at least one of current speed information of the vehicle, location information of the vehicle, and environmental information where the vehicle is located;
   performing image processing on the first image set based on the vehicle target information to obtain a second image corresponding to the first image set, wherein the image processing comprises at least one of noise reduction, color correction, and clarity processing; and
   controlling a display device inside the vehicle to display the second image.

2. The image processing method according to claim 1, wherein the step of performing the image processing on the first image sett based on the vehicle target information to obtain the second image corresponding to the first image set comprises:

   determining a target image processing model based on the current speed information, the location information, and/or the environmental information, wherein different vehicle target information correspond to different target image processing models; and
   inputting the first image set into a trained target image processing model and determining that an output of the target image processing model is the second image.

3. The image processing method according to claim 2, after obtaining the vehicle target information of the vehicle and the first image set shot by the at least two camera devices located inside the vehicle, further comprising:

   screening first images in the first image set to obtain a third image, wherein the third image is an image from the first image set that comprises human body information, and the first image set comprises at least two first images;
   correspondingly, the step of inputting the first image set into the trained target image processing model and determining that the output of the target image processing model is the second image comprises:

inputting the third image into the trained target image processing model and determining that the output of the target image processing model is the second image.

4. The image processing method according to claim 1, before obtaining the vehicle target information of the vehicle and the first image set shot by the at least two camera devices located inside the vehicle, further comprising:

obtaining, in response to receiving a first instruction, a light value inside the vehicle collected by a light sensor inside the vehicle;
sending, if the light value is less than a preset value, a light compensation instruction to a light compensation device inside the vehicle, wherein the light compensation instruction is configured to instruct the light compensation device to provide additional lighting to an environment inside the vehicle; and
sending a shooting instruction to the at least two camera devices, wherein the shooting instruction is configured to instruct the at least two camera devices to shoot the first images respectively, and the at least two first images forming the first image set.

5. The image processing method according to claim 3, after inputting the third image into the trained target image processing model and determining that the output of the target image processing model is the second image, further comprising:

merging, if the human body information of a same user exists at least two of the second images, the human body information of the same user in the at least two second images to obtain a three-dimensional image of the user; and
controlling the display device to display the three-dimensional image.

6. The image processing method according to claim 4, wherein a roof inner wall of the vehicle is provided with a track;
the step of sending the shooting instruction to the at least two camera devices comprises:

sending, if there are at least two camera devices slidingly connected to the track inside the vehicle, the shooting instruction to the at least two camera devices connected to the track; and
sending, if there is one camera device slidingly connected to the track inside the vehicle, the shooting instruction to the one camera device connected to the track and to at least one camera device not connected to the track.

7. The image processing method according to claim 4, wherein a roof inner wall of the vehicle is provided with a track, and there is one camera device slidingly connected to the track inside the vehicle, a plurality of position sensors are provided on the track at different positions, and the plurality of position sensors are configured to send a first signal after position information of the one camera device slidingly connected to the track is detected;
the step of sending the shooting instruction to the at least two camera devices comprises:

sending the shooting instruction to at least one camera device not connected to the track; and
sending, after receiving the first signal from the plurality of position sensors, the shooting instruction to the one camera device connected to the track.

8. The image processing method according to claim 3, after inputting the third image set into the trained target image processing model and determining that the output of the target image processing model is the second image, further comprising:

determining, if the human body information in the second image comprises human body information of a driver, whether a driving posture of the driver meets a preset posture requirement based on the human body information of the driver;
sending, if the driving posture of the driver does not meet the preset posture requirement, a first reminder message to remind the driver to adjust the driving posture;
determining, if the human body information in the second image comprises human body information of a passenger, whether the passenger is wearing a seat belt based on the human body information of the same passenger; and
sending, if the passenger is not wearing a seat belt, a second reminder message to prompt the passenger to wear the seat belt.

9. The image processing method according to any of claims 1 to 8, after obtaining the vehicle target information of the vehicle and the first image set shot by the at least two camera devices located inside the vehicle, further comprising:

obtaining a sixth image of an in-vehicle space shot by a first camera device at a first shooting position;
obtaining a fourth image of the in-vehicle space shot by a second camera device at a second shooting position, wherein the sixth image and the fourth image are images from the first image set;

calculating a first transformation matrix based on a first feature point and a second feature point, wherein the first feature point is a feature point in the sixth image, and the second feature point is a feature point in the fourth image corresponding to the first feature point, and the first transformation matrix is a transformation matrix between a first camera coordinate system to which the first camera device belongs and a second camera coordinate system to which the second camera device belongs;

calculating three-dimensional coordinates of a first spatial point in the in-vehicle space based on the first transformation matrix, wherein the first spatial point is a spatial point corresponding to the first feature point and the second feature point; and

constructing a three-dimensional scene of the in-vehicle space based on the three-dimensional coordinates of the first spatial point.

10. The image processing method according to claim 9, wherein the step of calculating the first transformation matrix based on the first feature point and the second feature point comprises:

performing feature point matching processing on the sixth image and the fourth image to obtain the first feature point and the second feature point;

converting the first feature point to a first coordinate point and the second feature point to a second coordinate point based on a preset internal parameter matrix, wherein the internal parameter matrix represents a conversion relationship between an image coordinate system and a camera coordinate system; and

calculating the first transformation matrix based on the first coordinate point and the second coordinate point.

11. The image processing method according to claim 10, wherein the step of calculating the first transformation matrix based on the first feature point and the second feature point comprises:

calculating an intrinsic matrix based on the first coordinate point and the second coordinate point, wherein the intrinsic matrix represents a conversion relationship between the first camera coordinate system and the second camera coordinate system; and

decomposing the intrinsic matrix to obtain the first transformation matrix, and the first transformation matrix comprises a rotation matrix and a translation matrix.

12. The image processing method according to claim 9, wherein the step of calculating the three-dimensional coordinates of the first spatial point in the in-vehicle space based on the first transformation matrix comprises:

obtaining a first distance between a position of the first spatial point in the in-vehicle space and the second camera device; and

calculating the three-dimensional coordinates of the first spatial point based on the first distance, the preset internal parameter matrix, and the first transformation matrix.

13. The image processing method according to claim 9, wherein the step of constructing the three-dimensional scene of the in-vehicle space based on the three-dimensional coordinates of the first spatial point comprises:

obtaining a fifth image of the in-vehicle space, wherein the fifth image is shot by a third camera device;

determining a second transformation matrix based on a third feature point and a fourth feature point, wherein the third feature point is a feature point in the fourth image, and the fourth feature point is a feature point in the fifth image corresponding to the second feature point, and the second transformation matrix is a transformation matrix between the third camera coordinate system to which the third camera device belongs and the second camera coordinate system to which the second camera device belongs;

calculating three-dimensional coordinates of a second spatial point in the in-vehicle space based on the second transformation matrix, wherein the second spatial point is a spatial point corresponding to the third feature point and the fourth feature point; and

constructing three-dimensional scene of the in-vehicle space based on the three-dimensional coordinates of the first spatial point and the three-dimensional coordinates of the second spatial point.

14. The image processing method according to claim 13, wherein the step of determining the second transformation matrix based on the third feature point and the fourth feature point comprises:

determining a fifth feature point in the third feature point, wherein the fifth feature point is a feature point in the third feature point that matches the second feature point and the fourth feature point;

calculating a third shooting position of the third camera device based on three-dimensional coordinates of a spatial point corresponding to the fifth feature point; and

calculating the second transformation matrix between the third camera coordinate system corresponding to the third shooting position and the second camera coordinate system corresponding to the second shooting position.

15. The image processing method according to claim 13, after constructing the three-dimensional scene of the in-vehicle space based on the three-dimensional coordinates of the first spatial point and the three-dimensional coordinates of the second spatial point, further comprising:

calculating a loss value corresponding to scene construction parameters based on a preset cost function, wherein the scene construction parameters comprise a preset internal parameter matrix, transformation matrices corresponding to each shooting position, three-dimensional coordinates of spatial points in the in-vehicle space, and pixel coordinates of each image of the spatial points in the in-vehicle space; and optimizing the scene construction parameters based on a gradient descent method and the loss value.

16. An image processing device, comprising:

an image obtaining module, configured to obtain vehicle target information of a vehicle and a first image set shot by at least two camera devices located inside the vehicle, wherein the at least two camera devices are positioned at different locations inside the vehicle, and the vehicle target information comprises at least one of current speed information of the vehicle, location information of the vehicle, or the environmental information where the vehicle is located; an image processing module, configured to perform image processing on the first image set based on the vehicle target information to obtain a second image corresponding to the first image set, wherein the image processing comprises at least one of noise reduction, color correction, and clarity processing; and a display control module, configured to control a display device inside the vehicle to display the second image.

17. A terminal device, comprising a memory, a processor, and a computer program stored in the memory and capable of running on the processor which, when executed by the processor, causes the processor to perform the image processing method according to any one of claims 1 to 15.

18. A computer-readable storage medium, storing a computer program which, when executed by a processor, causes the processor to perform the image processing method according to any one of claims 1 to 15.

19. A computer program product, wherein the computer program product, which, when executed on a terminal device, causes the terminal device to perform the image processing method according to any one of claims 1 to 15.

30

10

20

| display device | — | terminal device | — | camera device |

20

| camera device |

FIG. 1

S101

the vehicle target information and a first set of images shot by at least two camera devices located inside the vehicle are obtained.

S102

Based on the vehicle target information, the first image set is performed by image processing to obtain a second image corresponding to the first image set.

S103

a display device inside the vehicle is controlled to display the second image.

FIG. 2

S1021

a target image processing model is determined based on the current speed information, the location information, and/or the environmental information, where different vehicle target information correspond to different target image processing models;

S1022

the first image set is input into the trained target image processing model, and the output of the target image processing model is determined as the second image.

FIG. 3

S301

if there is human body information of the same user in at least two second images, the human body information of the same user are merged in the at least two second images to obtain a three-dimensional image of the user.

S302

the display device is controlled to display the three-dimensional image.

FIG. 4

FIG. 5

S501

in response to receiving a first instruction, a light value inside the vehicle collected by a light sensor inside the vehicle is obtained

S502

if the light value is less than a preset value, a light compensation instruction is sent to a light compensation device inside the vehicle

S503

a shooting instruction is sent to at least two camera devices.

FIG. 6

FIG. 7

S601

the shooting instruction is sent to at least one camera device not connected to the track.

S602

after the first signal sent by the plurality of position sensors is received, the shooting instruction is sent to the camera device connected to the track

FIG. 8

800

image processing device — 810

image obtaining module

image processing module — 820

display control module — 830

FIG. 9

900

910

memory

920

computer program

processor

terminal device

FIG. 10

## INTERNATIONAL SEARCH REPORT

International application No.

**PCT/CN2023/072392**

### A. CLASSIFICATION OF SUBJECT MATTER

H04N23/00(2023.01)i;H04N23/60(2023.01)i;B60R1/00(2022.01)i

According to International Patent Classification (IPC) or to both national classification and IPC

### B. FIELDS SEARCHED

Minimum documentation searched (classification system followed by classification symbols)

IPC: H04N, B60R

Documentation searched other than minimum documentation to the extent that such documents are included in the fields searched

Electronic data base consulted during the international search (name of data base and, where practicable, search terms used)

CNABS; CNTXT; CNKI: 车辆, 汽车, 车内, 摄像, 拍摄, 拍照, 照相, 采集, 图像, 位置, 定位, 速度, 车速, 环境, 光线, 亮度, 处理, 去噪, 色彩, 颜色, 矫正, 清晰度, 补光, 驾驶员, 乘客, 安全, 警示, 警告, 提醒; VEN; DWPI; USTXT; WOTXT; EPTXT: car, vehicle, camera, photo, image, shot, shoot, position, speed, environment, color, brightness, light, driver, passenger, safety, security, caution, warn, warning

### C. DOCUMENTS CONSIDERED TO BE RELEVANT

| Category* | Citation of document, with indication, where appropriate, of the relevant passages | Relevant to claim No. |
|---|---|---|
| PX | CN 115134537 A (GREAT WALL MOTOR COMPANY LIMITED) 30 September 2022 (2022-09-30) claims 1-10, and description, paragraphs [0030]-[0241] | 1-19 |
| Y | CN 111931579 A (SHANGHAI JIAO TONG UNIVERSITY) 13 November 2020 (2020-11-13) description, paragraphs [0034]-[0047] | 1-19 |
| Y | CN 102795174 A (SHENZHEN HANGSHENG ELECTRONICS CO., LTD.) 28 November 2012 (2012-11-28) description, paragraphs [0018]-[0026] | 1-19 |
| A | CN 110290945 A (NETRADYNE INC.) 27 September 2019 (2019-09-27) entire document | 1-19 |
| A | CN 111724408 A (GUANGDONG OCEAN UNIVERSITY) 29 September 2020 (2020-09-29) entire document | 1-19 |

☑ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **13 May 2023** | **15 May 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## EP 4 468 724 A1

| INTERNATIONAL SEARCH REPORT | International application No. |
|---|---|
| | **PCT/CN2023/072392** |

**C.      DOCUMENTS CONSIDERED TO BE RELEVANT**

| Category* | Citation of document, with indication, where appropriate, of the relevant passages | Relevant to claim No. |
|---|---|---|
| A | JP 2019185599 A (IHI CORP.) 24 October 2019 (2019-10-24)<br>entire document | 1-19 |

## INTERNATIONAL SEARCH REPORT
### Information on patent family members

International application No.

**PCT/CN2023/072392**

| Patent document cited in search report | | | Publication date (day/month/year) | Patent family member(s) | | | Publication date (day/month/year) |
|---|---|---|---|---|---|---|---|
| CN | 115134537 | A | 30 September 2022 | None | | | |
| CN | 111931579 | A | 13 November 2020 | None | | | |
| CN | 102795174 | A | 28 November 2012 | None | | | |
| CN | 110290945 | A | 27 September 2019 | US | 2022377129 | A1 | 24 November 2022 |
| | | | | US | 2021370879 | A1 | 02 December 2021 |
| | | | | US | 11453365 | B2 | 27 September 2022 |
| | | | | EP | 3504071 | A1 | 03 July 2019 |
| | | | | EP | 3504071 | A4 | 15 January 2020 |
| | | | | WO | 2018039646 | A1 | 01 March 2018 |
| | | | | EP | 4032728 | A1 | 27 July 2022 |
| CN | 111724408 | A | 29 September 2020 | None | | | |
| JP | 2019185599 | A | 24 October 2019 | JP | 7102890 | B2 | 20 July 2022 |

Form PCT/ISA/210 (patent family annex) (July 2022)

EP 4 468 724 A1

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210056928